# EUROPEAN PATENT SPECIFICATION

(11) **EP 1 051 832 B1**
(45) Date of publication and mention of the grant of the patent: **22.06.2011**
(21) Application number: 99900557.2
(22) Date of filing: 08.01.1999
(51) Int. Cl.: H04M 3/50, H04M 7/00, H04L 29/06

(54) **CALL CENTRE**
ANRUFZENTRALE
CENTRE D'APPELS

(30) Priority: 05.02.1998 GB 9802547
(43) Date of publication of application: 15.11.2000
(73) Proprietor: BRITISH TELECOMMUNICATIONS public limited company, London EC1A 7AJ (GB)
(72) Inventor: BEDDUS, Simon, Alexander, Ipswich, Suffolk IP4 1NX (GB); WILLS, Fenela, Felixstowe, Suffolk IP11 0GA (GB); FISHER, David, Mark, Ipswich, Suffolk IP1 2JL (GB); WELLS, David, Norwich NR2 2DG (GB)
(74) Representative: Williamson, Simeon Paul
(86) International application number: PCT/GB1999/000057
(87) International publication number: WO 1999/040712

(56) References cited:
- EP-A- 0 740 445
- WO-A-97/28635
- WO-A-97/50235
- WO-A-98/20667
- LAUTENBACHER M E ET AL: "INTELLIGENT INTERNET: VALUE-ADDED SERVICES BY INTERWORKING BETWEEN NETWORK TECHNOLOGIES" ISS '97. WORLD TELECOMMUNICATIONS CONGRESS. (INTERNATIONAL SWITCHIN SYMPOSIUM), GLOBAL NETWORK EVOLUTION: CONVERGENCE OR COLLISION? TORONTO, SEPT. 21 - 26, 1997, vol. VOL. 2, 21 September 1997, pages 45-51, XP000704454 ABDALLAH ABI-AAD ET AL

## Description

### BACKGROUND TO THE INVENTION

The present invention relates to a call centre and to a communications network using such a call centre.

Call centres are widely used by commercial organisations, for the handling of incoming calls and/or for initiating calls to customers. Typically, a call centre will have a large number of lines associated with a single number. Calls are received from customers and held in a queue before being directed to the next available agent. Prior to being placed in the queue the customer may indicate, e.g. using DTMF tones, the type of call they are making, and they may be placed in a queue for a specific group of agents depending on the type of call.

It has been recognised that the World Wide Web provides a means for enhancing communication between customers and a call centre. It has been proposed to enable customers to initiate a call from a call centre via a web page. For example, WO97/50235 discloses a call back system in which a customer enters their phone number on a form in an HTTP page, and then clicks on a "submit" button to request a call from the call centre. Lautenbacher M, E, et al: "Intelligent Internet. Value added services by Interworking between Network Technolgies" ISS '97. World Telecommunications Congress. (International Switching Symposium), Global Network Evolution: Convergence or Collision? Toronto, Sept. 21 - 26, 1997, Vol. 2, 21 September 1997, pages 45-51 describes a similar call back system but in which a user is first presented with a form which the user can complete to assist the centralised ACD function in choosing a suitable agent to call the user back (the form enables a user to specify e.g. a desired time for the call back, agent expertise and/or product information requested). The centralised ACD function then uses this information to select a suitable agent and, if the agent is busy, it waits until the agent becomes free and then enables a call to be set up between the agent and the user. EP A 0 740 445 describes another similar web-activated call back system.

WO A 98 20667, which designated Europe as a region and was filed on 3 November 1997 and published on 14 May 1998 and therefore represents prior art for the purposes of Article 54(3) EPC for all of the appended claims which validly claim priority of 3 February 1998, describes a system in which a user may initiate a call to a particular agent based on a selection made by a central web server. The web server selects an appropriate agent (or agents) and informs the user terminal of the telephone number of the selected agent (or agents) if or when they are available such that the user may then telephone the selected agent.

### SUMMARY OF THE INVENTION

According to a first aspect of the present invention there is provided a method of operating a communications system as set out in Claim 1.

The term "call centre" as used herein encompasses, as well as conventional PSTN call centres, call centres which distribute calls using data protocols such as H323, and hybrid centres handling both PSTN, Voice over IP and data calls.

The present invention provides a method of operating a call centre which significantly increases the efficiency of use of the capacity of the call centre and of the associated network. This is achieved by shifting at least part of the process of automatic call distribution, that is the process whereby a call is assigned to a particular one of the agents, from the call centre to the customer terminal. Then instead of lines being tied up with queuing customers, the setting up of a call may be delayed until an agent is available.

Automatic call distribution data is data which identifies, explicitly or implicitly, different groups of call agents, and which in a conventional call centre is processed at the call centre to allocate the next free agent in a selected group. In the present invention, this data is used instead at the customer terminal, so that an agent group, and preferably a specific agent, can be selected prior to the terminal establishing an in-band connection with the call centre.

Preferably the result of the selection made at the customer terminal in step (b) is communicated to the call centre via the communications network. Preferably the communications network is a data network supporting a packet-based internetworking protocol. In the embodiments described below, the data network is the Internet. Preferably the call established in step (c) is also established via the said data network. Alternatively, the call may be established via another network, such as the PSTN (public switched telephony network).

Preferably, step (c) is carried out only when the respective agent is free. Preferably the method includes running a call processing application at the customer terminal and communicating control data for the call processing application from the call centre to the customer terminal.

Preferably the call established in step (c) is set up from the call centre to the customer terminal. Preferably a client application running on the customer terminal returns a network address of the customer terminal on the data network to the call centre, and the call centre establishes a call via the data network to the said address.

The inventors have found it to be particularly advantageous to have calls set up via, e.g., the Internet, from the call centre to the customer terminal, using e.g. the IP address of the customer terminal. The network address will in general be known to any client application running on the customer terminal, and can therefore be made available to the call centre without requiring intervention by the customer. Moreover, functioning in this manner obviates the need for direct interaction between, e.g., a Java ACD applet on the customer terminal and an internet telephony application on the customer terminal, thereby eliminating interworking problems between these applications.

Preferably the method includes setting up a call between the customer terminal and an agent, storing data identifying the said agent, and automatically directing a subsequent call from the customer terminal to the said agent identified in the said stored data.

This preferred feature of the invention makes it possible to overcome the impersonality experienced by the customer when using a conventional call centre. Whereas conventionally if a customer rings a call centre with an enquiry, and then rings back a short time later, they will be connected to a different agent on each occasion, using the present invention is possible to ensure that when they ring back they are connected to the same agent. This is done by storing data recording the identity of the agent who takes the initial call. This is advantageously done using a cookie, that is a data item in a defined format stored on the customer terminal. This cookie is then automatically returned to the call centre when the customer subsequently accesses the call centre web page.

According to a second aspect of the present invention, there is provided a call centre as set out in claim 20.

According to a third aspect of the present invention there is provided a customer terminal as set out in claim 21.

### DESCRIPTION OF THE DRAWINGS

Systems embodying the present invention will now be described in further detail, by way of example only, with reference to the accompanying drawings, in which;
Figure 1 is a schematic of a communications system embodying the invention;
Figure 2 shows the architecture of the principal components of the system of Figure 1;

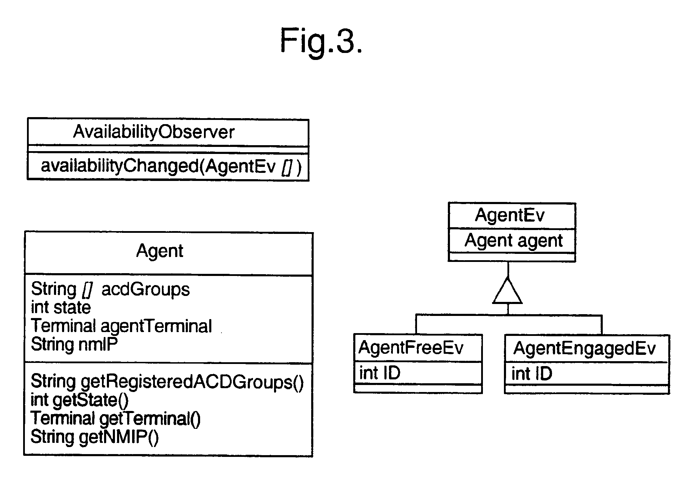

Figure 3 shows the software objects used to implement the agent session component; and
Figure 4 shows the information flows in a system embodying the invention when an agent is busy;
Figure 5 is a diagram showing objects used in implementing the invention;
Figure 6 shows instances of the objects of Figure 5;
Figure 7 shows definitions of the objects of Figures 5 and 6.

### DESCRIPTION OF EXAMPLES

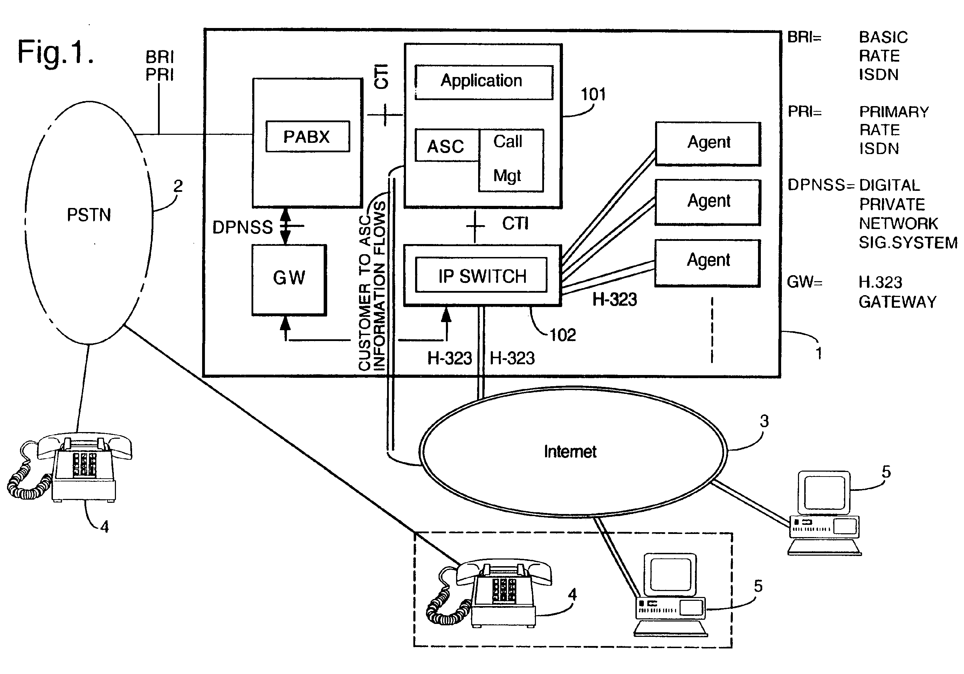

As shown in Figure 1, a communications system comprises a call centre 1 connected to first and second communications networks 2,3. In this example, the first network 2 is the PSTN (public switched telephony network) and connects the call centre 1 to customer terminals 4 comprising telephones. The second network 3 is the Internet and connects customer terminals 5 comprising, e.g. personal computers which run an internet telephony client such as Microsoft's NetMeeting (Trade Mark). As shown in the Figure, one of the telephones may be co-located with one of the personal computers, e.g. when the customer has two telephone lines used simultaneously for voice and data respectively.

A first platform 101 in the call centre 1, the telephony platform, runs a call centre application. The call centre application uses resources provided by lower level modules including an agent session component (ASC) module and a call management module. The first platform is connected to a second platform 102 which functions as an IP (internet protocol) telephony switch and connects calls from customer terminals to a selected one of a number of agents. Each agent is implemented using a data terminal and a respective internet telephony client. The agents may be located at the call centre or at respective remote sites. A PABX connects calls from the PSTN 2 e.g. using ISDN to the PABX and using a CTI protocol on the interface to the telephony platform. Traffic from the PSTN is packetised and passed to the agents via an H323 gateway and the IP telephony switch. The H323 protocol, which is a well known protocol used e.g. for multimedia conferencing over internet connections, is also used to connect the agents to the IP telephony switch.

The CTI (computer telephony interfaces) in the call centre may be interfaces using both first party and third party call components, as described and claimed in our co-pending Patent application WO9937081 published 22.07.99.

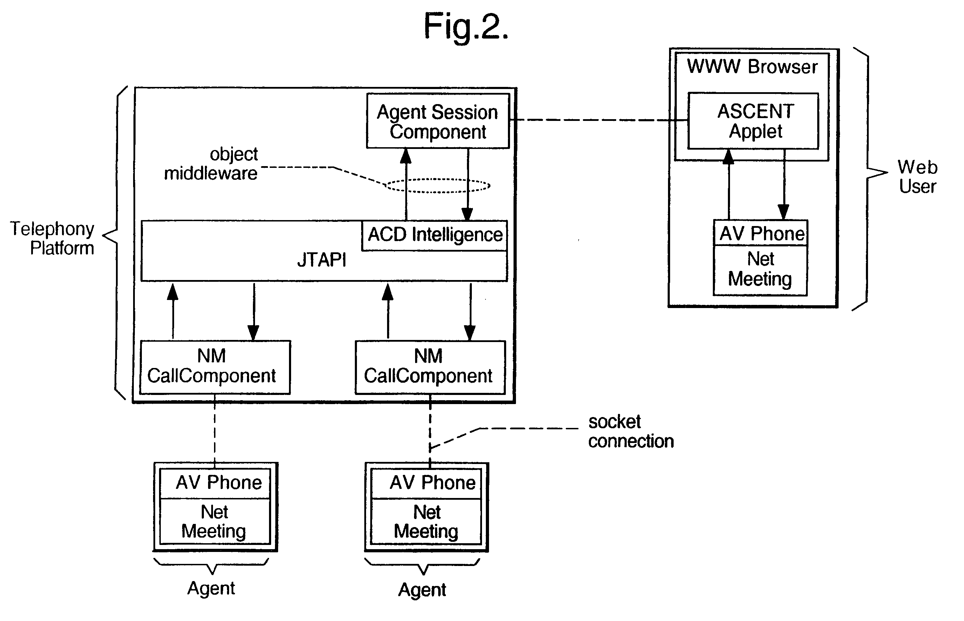

As shown in Figure 2, users of the customer terminals 5 employ a web browser which addresses the call centre using an appropriate URL and downloads e.g. a Java applet which provides a data interface to the agent session component in the telephony platform. ACD (automatic call distribution) data is communicated from the agent session component to the customer terminal via this data interface. The ACD data communicated to the web browser from the call centre may include the identities of a number of agent groups (e.g. "technical", "marketing", "sales") and the status of the corresponding queues. The status information might include, for example, the length of the queue and the expected waiting time in the queue. The agent group identities may be returned as HTTP data and displayed explicitly on the web page. The status data may be returned as variables to the Java applet and are handled appropriately by the applet. Although the status data may be displayed directly on the web page, in a preferred implementation, the status data is used by the Java applet to control the outputting of audio announcements or voice clips.

Optionally, the ACD data may extend to identifying individual agents. For example, a button may be associated with an agent group which, when clicked, displays a list of agent names, together with further buttons for the selection of a particular agent by the customer. Then, when the customer clicks on the "call me" button, their call is only set up when the named agent is free. Alternatively, explicit agent identity data may not be shown to the customer, but when a call is established, the agent identity may be stored, e.g. as a cookie on the customer terminal or alternatively in a cache at the call centre, and a subsequent call within a defined period, e.g. on the same day, may be queued for connection to the same agent.

Although alternatively other client applications may be used to interact with the call centre, for example through the use of a dedicated plug-in client, the use of Java applets is preferred since the applets can run on any Web browser and do not threaten the security of the customer terminal.

The user may initiate a call to the call centre by pressing a "call me" button on the relevant web page. A separate "call me" button may be displayed on the web page for each agent group, or there may be a single call me button on the page and, e.g., radio buttons beside each agent group to indicate the customer's selection. When the customer clicks on the "call me" button, the Java applet returns the unique IP address of the customer terminal for use by the in later IP telephony calls with the call centre. Even before that button is pressed, the applet may return data to the call centre, e.g. when ever the user's mouse is over the button, or whenever a user first selects the relevant web page. This information may subsequently be used for a telemarketing campaign, calling all users that have shown interest in a particular web site. In this way the call centre is provided with useful statistics in the pre-call phase, before a call has been set up, and this information may be used in controlling the queues to call centre agents, and in other logic functions implemented at the call centre. This information may be presented to agent supervisors along with other agent statistics. For example a display showing numbers of busy agents, free agents, customers held in queues, customers with mice positioned to call and customers looking at the company web page. Such information is of use to systems administrators.

As a customer clicks their mouse over the 'call me' button an applet will request a free agent from the ACD.

When a customer decides to call the call centre instead of making the call immediately, the caller may receive voice clips via the browser simulating an IVR (intelligent voice response) system at the call centre. Since the browser (for example by using CGI scripts and custom pages or by using an applet) is aware of the status of the Call Centre, in terms of queue lengths etc, the voice clips reflect what an IVR system would play in those circumstances if the call to the call centre had already been set up. as previously described the conventional 'press 1 for sales; 2 for marketing; 3.. etc' dialogue is replaced with a GUI (graphic user interface) style options menu with point and click buttons. The caller may be presented with audio and visual images of the product/company while they wait. When an agent is available the call is finally set up. This may occur in either direction. Audio data may be downloaded to the client application when the relevant web page is first visited. This is appropriate, for example, for background music that is to be played to the user as they wait for an agent, and for a ring tone that is to be played to the customer when a call is initiated. Alternatively or in addition, other audio data is downloaded during the initial burst of ring tone as the call is initiated: this may be more appropriate for 'progress' type announcements. The audio clips may include, e.g, announcements that "you are no. x in the queue", where x is the position of the user in the queue. The applet may trigger the playing of the appropriate voice clip in response to control inputs from the ASC. Other audio or visual information, including menus requiring user input, may be presented to the user via the ASC/IP connection from the call centre both before, during and after the call. By playing audio clips of e.g. a ring tone and subsequent announcements, the application on the customer terminal simulates the existence of a call prior to the call in fact being established.

If the Call Centre only makes/receives calls from the internet there is no need for the centre to have a traditional IVR (intelligent voice response) system. There is also no need to have conventional queues of callers waiting to speak to an agent. As is further described below, callers queue before the call is made. If it is wished the caller may be asked if they would prefer to be called back, and if so could specify for example preferred times etc. on a web form. When a call is made, it may be made using internet telephony, or using the PSTN in the case of customers who have two telephone lines.

The implementation shown in Figure 2 includes the following components:
- ACDi: Automatic Call Distribution Intelligence
- ASC: Agent Session Component
- JTAPI: Java Telephony Application Programming Interface
- NM: NetMeeting
- NMCC: NetMeetingCallComponent.

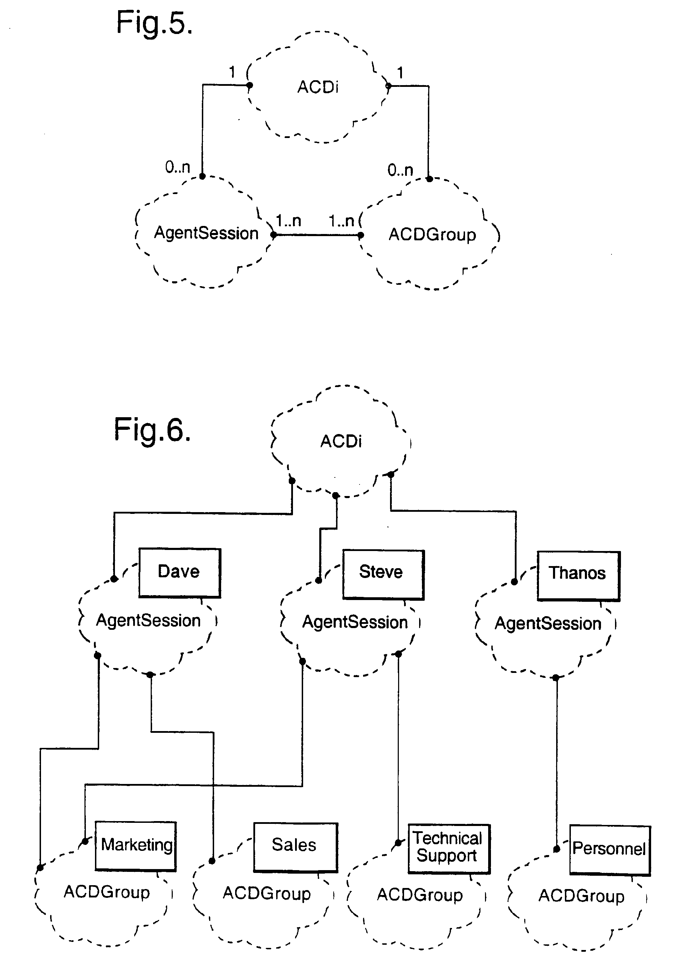

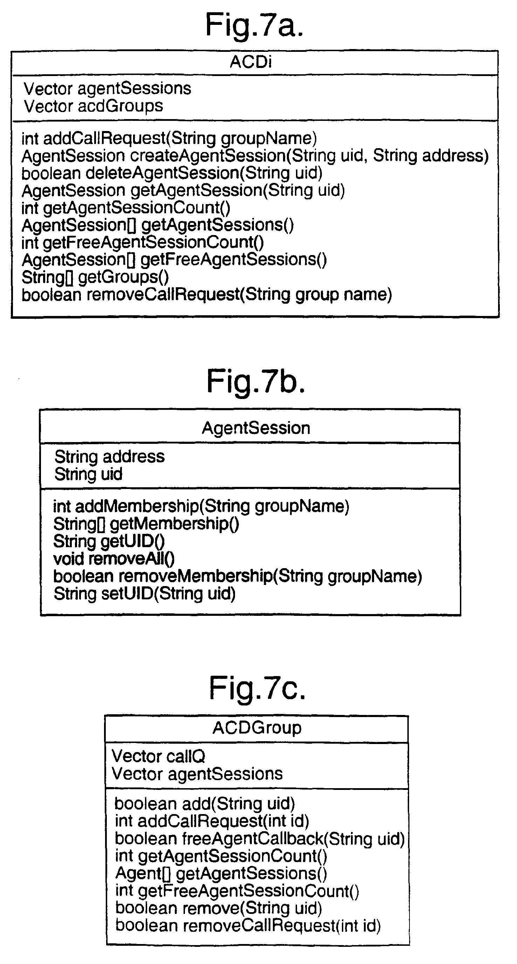

The relationship between the principle components, ACDi, Agent Session (ASC) and Agent Group is illustrated, using OOD (object oriented design) conventions in Figure 5. Figure 6 shows how these classes are instantiated during a particular session and Figures 7a to 7b show definitions of these classes. The ACDi object acts as the centre of control and maintains lists of all AgentSession and ACDGroup objects. It exports a CORBA interface to allow administration and utilisation of functionality. The Automatic Call Distribution Group (ACDGroup) represents a call group within the call centre. As such, it allows agents to become members and thereby service call requests applicable to that group. For example different groups might relate to sales or to technical support. Each ACDGroup maintains a list of registered AgentSession objects, representing agents that are members of that group. The AgentSession object represents an agent logged into the call centre. AgentSession objects are created when an agent logs in and removed when that agent logs out, giving the object a lifetime that corresponds to the log-in status of an agent. Each AgentSession object maintains a list of ACDGroup objects of which it is registered as a member.

In the example shown in Figure 6, an agent, called Dave, is logged into the system and has an AgentSession object that represents him. Dave is registered as a member of the Marketing and Sales ACD Groups.

The ASC ascertains the availability of agents. It receives asynchronous notification when an agent's availability alters. As described above, the web user can initiate a call or receive a call back from an agent in appropriate call group. For example the customer may choose from groups corresponding to sales, order handling and invoicing. This menu of choices may be displayed to the user on the call centre web page. An applet, termed the "ASCENT" applet, at the customer terminal reflects the call request state visually and presents business specific information whilst waiting for a call to be established by a free agent making a return call to the user. The ASCENT applet may communicate with the local IP telephony, e.g. Net Meeting, client. The applet may reflect the call request state audibly by playing, e.g. ringing tones and status messages. In this way the applet simulates a call to the call centre, although the call only becomes a reality when an agent is free. In this way the invention reduces the media stream bandwidth into the call centre since the calls are not queued into the centre awaiting a free agent. Call centre speech processing and dialogue handling is moved to the client machine, reducing the cost to the call centre owner.

A software design implementing the invention will now be described in further details. The availability of agents registered with the application is made known to the ASC via the addition of an AvailabilityObserver on application. When an agent's availability alters, the method *availabilityChanged(.*..*)* is invoked against the AvailabilityObserver to notify the ASC and the ACD Intelligence (ACDi) The ASC may have access into the application via CORBA, whereby methods can be invoked across the network against remote objects. The application when used to implement the invention provides the methods specified below:

```
  boolean addAvailabilityObserver(AvailabilityObserver ao)
```

Allow the ASC to add an observer to the application in order to receive asynchronous notification of agents' availability changes.

```
• boolean removeAvailabilityObserver(AvailabilityObserver ao)
```

Allow the ASC to remove the observer previously added.

```
• Agents [ ] getAgents ( )
```

Allow the ASC to obtain a list of agents currently logged into application, including their availability and ACD groups.

```
• String[] getACDGroups()
```

Allow the ASC to obtain a list of the available ACD groups within the application.

```
• boolean makeCall(Agent agent, String nmIP)
```

Allow the ASC to initiate a call, on behalf of the specified agent, to the specified NetMeeting IP address.

### Agent Session Component (ASC)

The Agent Session Component (ASC) provides an API (application programmers interface) consisting of case-insensitive text-based messages. These are passed via a socket connection between the ASC and each Call Applet. The messages are listed below. Angled brackets denote parameters appropriate to the specified command.

### Call Applet to ASC

- [register, <*nmIP*>] Used to register the Call Applet with the ASC, passing it the IP address of the machine on which the applet is running, subsequently used in all communication to unambiguously identify itself.
- [deregister, <*nmIP*>] Used to deregister the Call Applet with the ASC.
- [callrequest, < *nmIP*>, <*ACD group*>] Used when the Call Applet wishes to receive a call from an agent in the specified ACD group.
- [getacdinfo, < *nmIP*>)] Returns the current state of the ACD groups, number of agents, busy/free status etc.
   *ASC to Call Applet*
- [requestqueued, < *eturc* >] Used when the intended agent that will handle a specific call is busy, but will be free after an *estimated time until return call* < *eturc* > seconds.
- [freeagent] Sent when an appropriate agent's state has changed to free.

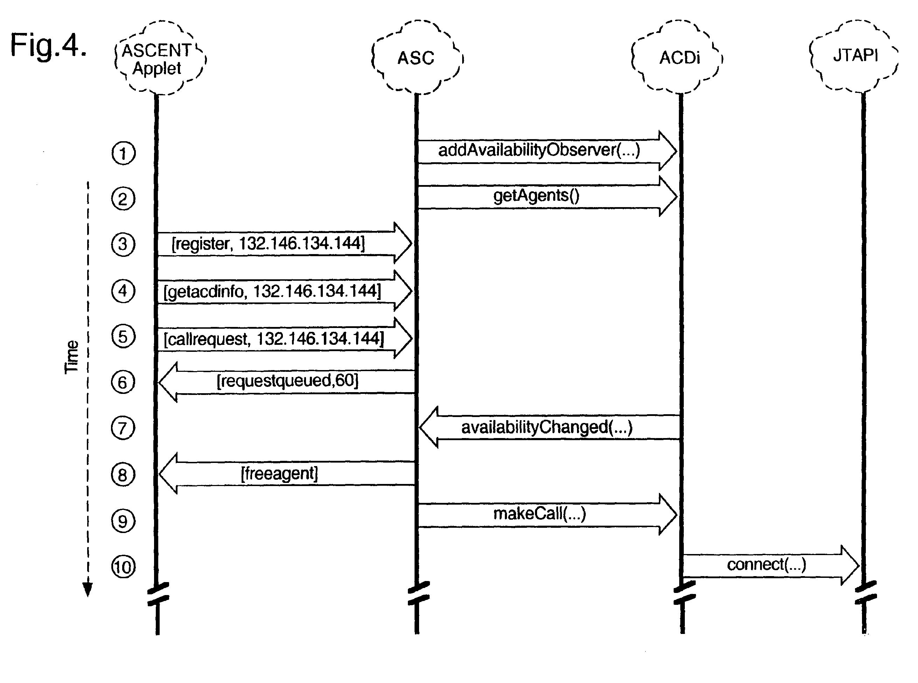

A scenario using the above design will now be described with reference to Figure 4. The numbers in this description denote the steps shown in that Figure.

On the telephony platform the ASC, ACDi, and JTAPI are running. The ASC initialises by adding an AvailabilityObserver to the ACDi (1), and then obtains a list of agents currently registered (2). Whilst browsing the WWW, the Web User enters a URL that points to a HTML page containing the Java ASCENT applet. During initialisation, the ASCENT applet registers itself with the ASC (3), and proceeds to obtain a list of ACD groups and associated agents' states (4). This information is presented via a Graphical User Interface (GUI) and the Web User is to select an ACD group with which to place a call request.

It the scenario illustrated in Figure 4, the ACD group with which the Web User has elected to place a call has no agents available at that time. The call request is queued at the ASC and a message is sent to the applet to that end, along with an *estimated time until return call* (eturc) (6). At this point, intelligence in-built in the applet deals with the situation and by playing audio status messages and giving visual information such as company history and product information. Via the AvailabilityObserver, a availabilityChanged ( ) invocation is received by the ASC to indicate that an agent's state has changed (7). The agent that has become available is part of the ACD group that the applet placed a call request with and so the applet is informed that an agent is now free (8). The ASC then makes a call on the free agent's behalf (9), which subsequently initiates an IP telephony call using JTAPI (Java Telephony Application Programmers Interface) (10).

## Claims

1. A method of operating a communications system comprising a call centre and a plurality of customer terminals connected via a communications network to the call centre, in which at least part of a process of automatic call distribution ACD, is carried out at a customer terminal, comprising
a) communicating automatic call distribution ACD data comprising a current list of agent groups and/or agents and associated agents' states to a customer terminal;
b) using the ACD data selecting at the customer terminal an agent group and/or an agent; and
c) subsequently establishing a call between a customer terminal and an agent in the group, or the agent, selected in step b) via the call centre.

2. A method according to claim 1 in which the communications network is a data network supporting a packet-based internetworking protocol.

3. A method according to claim 1 or 2, in which the result of the selection made at the customer terminal in step b) is communicated to the call centre via the communications network.

4. A method according to claim 3, in which the call established in step c) is also established via the said data network,

5. A method according to any one of the preceding claims, in which a call is established between a customer terminal and the call centre only when an agent selected by the automatic call distribution process is free.

6. A method according to any one of the preceding claims, in which when the call is established the call is setup from the call centre to the customer terminal.

7. A method according to claim 6, when dependent directly or indirectly on claim 2, in which a client application running on the customer terminal returns a network address of the customer terminal on the data network to the call centre, and the call centre establishes a call via the data network to the said address.

8. A method according to any one of the preceding claims, including transmitting pre-call-phase data from a customer terminal via a data channel prior to a call being established between the customer terminal and the call centre.

9. A method according to claim 8, in which the said pre-call-phase data is automatically returned to the call centre in response to the selection by the customer of a web page.

10. A method according to claim 8 or 9, in which the said pre-call-phase data is returned to the call centre in response to the presence of a user-controlled pointer in a predetermined region of a graphical display generated by a client application on the customer terminal.

11. A method according to claim 10, in which the said predetermined region is a button, that, when selected, requests initiation of a call.

12. A method according to anyone of the preceding claims, including outputting at the customer terminal audio announcements received as data from the call centre, the outputting of the audio announcements at the customer terminal being triggered in response to one or more of:
a) status data received from the call centre; and
b) user inputs registered at the customer terminal.

13. A method according to claim 12, including simulating at the customer terminal, using the said audio announcements, the establishment of a call between the customer terminal and the call centre, prior to the call being in fact established.

14. A method according to any one of the preceding claims, including communicating a client application from the call centre to the customer terminal, and in which the client application captures and returns to the call centre a network address of the customer terminal.

15. A method according to claim 14, in which the client application is a Java applet.

16. A method according to any one of the preceding claims, in which the ACD data communicated to the customer terminal includes data identifying individual agents.

17. A method according to any one of the preceding claims, including setting up a call between the customer terminal and an agent, storing data identifying the said agent, and automatically directing a subsequent call from the customer terminal to the said agent identified in the said stored data.

18. A method according to claim 17, in which the said data is stored at the customer terminal.

19. A method according to claim 18, in which the said data is stored as a cookie, and in which the said data is returned automatically to an ACD application when the customer terminal subsequently accesses the call centre web.

20. A call centre for use in a method according to any one of the preceding claims, the call centre including;
a) a network interface for connection to a communications network;
b) a data output arranged to output automatic call distribution ACD data comprising a current list of agent groups and/or agents and associated agents' states via the network interface;
c) means responsive to a selection made by a user in response to the said ACD data for setting up a call between a customer terminal and a selected agent.

21. A customer terminal for use in a method according to any one of the preceding claims, the customer terminal including:
a) a network interface for connection to a communications network;
b) a client application operable to receive ACD data comprising a current list of agent groups and/or agents and associated agents' states via the network interface and being further operable to register a user selection of an agent or group of agents listed in the received ACD data;
c) output means arranged to output selection data via the network interface, in use the selection data being received at a call centre.

## Patentansprüche

1. Verfahren zum Betreiben eines Kommunikationssystems mit einer Anrufzentrale und mehreren Kundenanschlüssen, die über ein Kommunikationsnetz mit der Anrufzentrale verbunden sind, wobei zumindest ein Teil eines Vorgangs einer automatischen Anrufverteilung, ACD, an einem Kundenanschluss ausgeführt wird, mit
a) Übermitteln automatischer Anrufverteilungs-, ACD-Daten, die eine aktuelle Liste von Agentengruppen und/oder Agenten und zugeordneten Agentenzuständen umfassen, an einen Kundenanschluss;
b) Auswählen einer Agentengruppe und/oder eines Agenten am Kundenanschluss unter Verwendung der ACD-Daten; und
c) anschließend Herstellen eines Anrufs zwischen einem Kundenanschluss und einem Agenten in der Gruppe, der in Schritt b) über die Anrufzentrale ausgewählt wurde.

2. Verfahren nach Anspruch 1, wobei das Kommunikationsnetz ein Datennetz ist, das ein paketbasiertes Internetverbundprotokoll unterstützt.

3. Verfahren nach Anspruch 1 oder 2, wobei das Ergebnis der Auswahl, die am Kundenanschluss in Schritt b) vorgenommen wurde, der Anrufzentrale über das Kommunikationsnetz übermittelt wird.

4. Verfahren nach Anspruch 3, wobei der in Schritt c) hergestellte Anruf auch über das Datennetz hergestellt wird.

5. Verfahren nach irgendeinem der vorhergehenden Ansprüche, wobei ein Anruf zwischen einem Kundenanschluss und der Anrufzentrale nur dann hergestellt wird, wenn ein durch den automatischen Anrufverteilungsvorgang ausgewählter Agent frei ist.

6. Verfahren nach irgendeinem der vorhergehenden Ansprüche, wobei, wenn der Anruf hergestellt ist, der Anruf von der Anrufzentrale zum Kundenanschluss durchgeschaltet wird.

7. Verfahren nach Anspruch 6, wenn er direkt oder indirekt von Anspruch 2 abhängt, wobei eine auf dem Kundenanschluss laufende Clientapplikation eine Netzadresse des Kundenanschlusses auf dem Datennetz zur Anrufzentrale zurücksendet und die Anrufzentrale einen Anruf bei dieser Adresse über das Datennetz herstellt.

8. Verfahren nach irgendeinem der vorhergehenden Ansprüche, einschließlich der Übertragung von Vor-Anruf-Phase-Daten von einem Kundenanschluss über einen Datenkanal, bevor ein Anruf zwischen dem Kundenanschluss und der Anrufzentrale hergestellt wird.

9. Verfahren nach Anspruch 8, wobei die Vor-Anruf-Phase-Daten als Antwort auf die Auswahl durch den Kunden einer Webseite automatisch zur Anrufzentrale zurückgesendet werden.

10. Verfahren nach Anspruch 8 oder 9, wobei die Vor-Anruf-Phase-Daten als Antwort auf das Vorhandensein eines benutzergesteuerten Zeigers in einem vorgegebenen Bereich einer von einer Clientapplikation am Kundenanschluss erzeugten grafischen Anzeige zur Anrufzentrale zurückgesendet werden.

11. Verfahren nach Anspruch 10, in dem der vorgegebene Bereich eine Schaltfläche ist, die, wenn sie ausgewählt wird, die Einleitung eines Anrufs anfordert.

12. Verfahren nach irgendeinem der vorhergehenden Ansprüche einschließlich Ausgeben von Sprachmitteilungen am Kundenanschluss, die als Daten von der Anrufzentrale empfangen werden, wobei das Ausgeben der Sprachmitteilungen am Kundenanschluss als Antwort auf eines oder mehrere der folgenden ausgelöst werden:
a) von der Anrufzentrale empfangene Statusdaten; und
b) am Kundenanschluss registrierte Benutzereingaben.

13. Verfahren nach Anspruch 12 einschließlich der Simulierung der Herstellung eines Anrufs zwischen dem Kundenanschluss und dem Anrufzentrale, bevor der Anruf tatsächlich hergestellt wird, unter Verwendung der Sprachmitteilungen am Kundenanschluss.

14. Verfahren nach irgendeinem der vorhergehenden Ansprüche, einschließlich des Übermittelns einer Clientapplikation von der Anrufzentrale zum Kundenanschluss, und wobei die Clientapplikation eine Netzadresse des Kundenanschlusses erfasst und an die Anrufzentrale zurücksendet.

15. Verfahren nach Anspruch 14, wobei die Clientapplikation ein Java-Applet ist.

16. Verfahren nach irgendeinem der vorhergehenden Ansprüche, wobei die an den Kundenanschluss übermittelten ACD-Daten Daten beinhalten, die einzelne Agenten identifizieren.

17. Verfahren nach irgendeinem der vorhergehenden Ansprüche, einschließlich des Durchschaltens eines Anrufs zwischen dem Kundenanschluss und einem Agenten, Speichern von Daten, die den Agenten identifizieren, und automatisches Leiten eines anschließenden Anrufs vom Kundenanschluss zu dem in den gespeicherten Daten identifizierten Agenten.

18. Verfahren nach Anspruch 17, wobei die Daten am Kundenanschluss gespeichert werden.

19. Verfahren nach Anspruch 18, wobei die Dateien als Cookie gespeichert werden und wobei die Daten automatisch zu einer ACD-Applikation zurückgebracht werden, wenn der Kundenanschluss anschließend auf das Anrufzentralenweb zugreift.

20. Anrufzentrale zur Verwendung bei einem Verfahren nach irgendeinem der vorhergehenden Ansprüche, mit:
a) einer Netzschnittstelle zur Verbindung mit einem Kommunikationsnetz;
b) einer Datenausgabe, die dazu angeordnet ist, über die Netzschnittstelle automatische Anrufverteilungs-, ACD-Daten auszugeben, die eine aktuelle Liste von Agentengruppen und/oder Agenten und zugeordneten Agentenzuständen umfassen;
c) einer Einrichtung, die auf eine von einem Benutzer vorgenommene Auswahl als Antwort auf die ACD-Daten reagiert, um einen Anruf zwischen einem Kundenanschluss und einem ausgewählten Agenten durchzuschalten.

21. Kundenanschluss zur Verwendung bei einem Verfahren nach irgendeinem der vorhergehenden Ansprüche, mit:
a) einer Netzschnittstelle zur Verbindung mit einem Kommunikationsnetz;
b) einer Clientapplikation, die dazu funktionsfähig ist, über die Netzschnittstelle ACD-Daten zu empfangen, die eine aktuelle Liste von Agentengruppen und/ oder Agenten und zugeordneten Agentenzuständen umfassen, und weiter dazu funktionsfähig ist, eine Benutzerauswahl eines Agenten oder einer Gruppe von Agenten, die in den empfangenen ACD-Daten aufgelistet sind, zu registrieren;
c) einer Ausgabeeinrichtung, die dazu angeordnet ist, Auswahldaten über die Netzschnittstelle auszugeben, wobei im Gebrauch die Auswahldaten in einer Anrufzentrale empfangen werden.

## Revendications

1. Procédé d'exploitation d'un système de communication comprenant un centre d'appels et une pluralité de terminaux d'abonné connectés par l'intermédiaire d'un réseau de communication au centre d'appels, dans lequel au moins une partie d'un processus de distribution automatique des appels, ACD, est effectuée au niveau d'un terminal d'abonné, comprenant
a) la communication des données de distribution automatique des appels ACD comprenant une liste actuelle de groupe d'agents et/ou d'agents et les états des agents associés à un terminal d'abonné ;
b) grâce à l'utilisation des données ACD, la sélection au niveau du terminal d'abonné d'un groupe d'agents et/ou un agent ; et
c) l'établissement par la suite d'un appel entre un terminal d'abonné et un agent faisant partie du groupe, où l'agent, sélectionné à l'étape b) par l'intermédiaire du centre d'appels.

2. Procédé selon la revendication 1, dans lequel le réseau de communication est un réseau de données supportant un protocole d'interconnexion de réseaux à base de paquets.

3. Procédé selon la revendication 1 ou 2, dans lequel le résultat de la sélection réalisée au niveau du terminal d'abonné à l'étape b) est communiqué au centre d'appels via le réseau de communication.

4. Procédé selon la revendication 3, dans lequel l'appel établi au cours de l'étape c) est également établi par l'intermédiaire dudit réseau de données.

5. Procédé selon l'une quelconque des revendications précédentes, dans lequel un appel est établi entre un terminal d'abonné et le centre d'appels uniquement lorsqu'un agent sélectionné par le processus de distribution automatique des appels est libre.

6. Procédé selon l'une quelconque des revendications précédentes, dans lequel, lorsque l'appel est établi, l'appel est établi à partir du centre d'appels vers le terminal d'abonné.

7. Procédé selon la revendication 6, lorsqu'il dépend directement ou indirectement de la revendication 2, dans lequel une application client en cours d'exécution au niveau du terminal d'abonné renvoie une adresse réseau du terminal d'abonné au niveau du réseau de données au centre d'appels, et le centre d'appels établit un appel via le réseau de données à ladite adresse.

8. Procédé selon l'une quelconque des revendications précédentes, comprenant la transmission de données concernant la phase avant l'établissement de l'appel à partir d'un terminal d'abonné par l'intermédiaire d'un canal de données préalablement à l'établissement d'un appel entre le terminal d'abonné et le centre l'appels.

9. Procédé selon la revendication 8, dans lequel lesdites données concernant la phase avant l'établissement de l'appel sont automatiquement retournées au centre d'appels en réponse à la sélection par l'abonné d'une page Web.

10. Procédé selon l'une des revendications 8 ou 9, dans lequel lesdites données concernant la phase avant l'établissement de l'appel sont retournées au centre d'appels en réponse à la présence d'un pointeur contrôlé par l'utilisateur dans une zone prédéterminée d'un affichage graphique généré par une application client au niveau du terminal d'abonné.

11. Procédé selon la revendication de 10, dans lequel la zone prédéterminée est un bouton, qui, lorsqu'il est sélectionné, demande l'initiation d'un appel.

12. Procédé selon l'une quelconque des revendications précédentes, comprenant l'émission au niveau du terminal d'abonné d'annonces audio reçues sous forme de données venant du centre d'appels, l'émission des annonces audio au niveau du terminal d'abonné étant déclenchée en réponse à un ou plusieurs parmi :
a) des données d'état reçues à partir du centre d'appels ; et
b) des données saisies par l'utilisateur enregistrées au niveau du terminal d'abonné.

13. Procédé selon la revendication 12, comprenant la simulation, au niveau du terminal d'abonné, en utilisant lesdites annonces audio, de l'établissement d'un appel entre le terminal d'abonné et le centre d'appels, avant l'établissement réel de l'appel.

14. Procédé selon l'une quelconque des revendications précédentes, comprenant la communication d'une application client du centre d'appels au terminal d'abonné, et dans lequel l'application client capture une adresse réseau du terminal d'abonné et la renvoie au centre d'appels.

15. Procédé selon la revendication 14, dans lequel l'application client est un applet Java.

16. Procédé selon l'une quelconque des revendications précédentes, dans lequel les données ACD communiquées au terminal d'abonné comprennent des données d'identification d'agents individuels.

17. Procédé selon l'une quelconque des revendications précédentes, comprenant l'établissement d'un appel entre le terminal d'abonné et un agent, le stockage des données d'identification dudit agent, et l'acheminement automatique d'un appel ultérieur à partir du terminal d'abonné auxdits agents identifiés dans lesdites données stockées.

18. Procédé selon la revendication 17, dans lequel lesdites données sont stockées au niveau du terminal d'abonné.

19. Procédé selon la revendication 18, dans lequel lesdites données sont stockées sous forme d'un cookie, et dans lequel lesdites données sont envoyées automatiquement à une application ACD lorsque le terminal d'abonné accède par la suite au centre d'appels Web.

20. Un centre d'appels pour utilisation dans un procédé selon l'une quelconque des revendications précédentes, le centre d'appels comprenant :
a) une interface réseau pour la connexion à un réseau de communication ;
b) une sortie de données conçue pour sortir des données de distribution automatique ACD comprenant une liste actuelle de groupes d'agents et/ou d'agents et des états d'agents associés via l'interface réseau ;
c) des moyens sensibles à une sélection réalisée par un utilisateur en réponse audites données ACD pour l'établissement d'un appel entre un terminal d'abonné et un agent sélectionné.

21. Un terminal d'abonné pour utilisation dans un procédé selon l'une quelconque des revendications précédentes, le terminal d'abonné comprenant :
a) une interface réseau pour la connexion à un réseau de communication ;
b) une application client exploitable pour recevoir des données ACD comprenant une liste actuelle ainsi que les états d'agents associés par l'intermédiaire de l'interface réseau et en étant en outre exploitable pour enregistrer une sélection faite par l'utilisateur d'un agent ou groupe d'agents faisant partie de la liste de données ACD reçues ;
c) des moyens de sortie agencés pour sortir les données de sélection via l'interface réseau, en exploitant les données de sélection étant reçues au niveau d'un centre d'appels.
